# EUROPEAN PATENT SPECIFICATION

(11) **EP 3 886 121 B1**
(45) Date of publication and mention of the grant of the patent: **06.05.2026**
(21) Application number: 20165554.5
(22) Date of filing: 25.03.2020
(51) Int. Cl.: H01B 7/295, H01B 7/02, B32B 15/08, B32B 3/26, H01B 7/22, B32B 1/08

(54) **FIRE-RESISTANT CABLE**
FEUERFESTES KABEL
CÂBLE RÉSISTANT AU FEU

(43) Date of publication of application: 29.09.2021
(73) Proprietor: Lapp Engineering AG, 6330 Cham (CH)
(72) Inventor: Giaccarello, Davide, 35043 Monselice (IT); Moda, Alessio, 45019 Taglio di Po (IT)
(74) Representative: Rutz & Partner

(56) References cited:
- EP-A1- 0 917 242
- WO-A1-2019/085492
- CN-A- 110 797 146
- US-A- 4 625 187

## Description

The present invention relates to a fire-resistant cable.

Fire-resistant cables typically comprise a structure of layers that fulfill various functions in order to ensure operability of the fire-resistant cable in case of fire for as long as possible. Such layers may have fire resistant or fire retardant functions or also mechanical functions for maintaining the geometrical structure of the structural elements of the fire-resistant cable.

EP0770259B1 discloses a fire-resistant cable with an inner layer of fire-resistant material over which is spirally wrapped an electrically insulating covering tape of an inorganic fire-resistant material with adjacent turns of the tape overlapping one another.

EP3301687B1 discloses a fire-resistant cable with a conductor, a first fire-protection layer formed by tightly wrapped tape turns around said conductor, a second fire-protection layer formed by tightly wrapped tape turns around said first fire-protection tape, a conductor insulation layer enclosing said second fire-protection layer and an outer jacket layer surrounding said conductor insulation layer.

With tightly wrapping insulation tapes around conductors and protection layers, fire resistance is maintained over a longer period of time up to a point where the cable gets typically instantaneously destroyed and is inoperable.

CN110797146A discloses a low-smoke flame-retardant safety communication cable, with conductors that are wrapped with a flame-retardant wrapping structure consisting of a molten flame-retardant material layer, which is coated with an aluminum plastic sheath. The aluminum plastic sheath is enclosed by a porous polyurethane foam plastic heat insulation layer.

WO2019085492A1 discloses a high-speed photoelectric composite cable that includes layers woven from a silver-plated copper wire.

US4625187A and EP0917242A1 disclose cables which permit the signal carried by the cable to radiate through apertures in the outer conductor. EP0917242A1 states that a common requirement of such radiating coaxial cabled is resistance to flame propagation. In radiating co-axial cable having a foam dielectric, flame propagation may be encouraged if the dielectric melts and escapes through the radiating apertures.

The problem of the present invention is to provide an improved fire-resistant cable that in case of fire is maintaining operability for a further extended period of time.

The improved fire resistance shall be achieved practically without any additional effort or expenditure.

Manufacturing processes and layer material used for conventional cables shall be further applicable.

The inventive solution shall be applicable for any cable structure that has been defined according to given requirements and specifications.

Further, the inventive solution shall be applicable for any type of cable, including electrical cables and optical cables used for example in the field of telecommunication, or for cables used for the transfer of energy.

The problem is solved by a fire-resistant cable according to claim 1. Further preferred embodiments of the fire-resistant cable are defined in dependent claims.

The fire-resistant cable, which has a cable longitudinal axis, comprises
- at least one conductor or group of conductors;
- at least one protection layer formed around and enclosing said conductor or group of conductors;
- at least one inner jacket layer formed around and enclosing said at least one protection layer; and
which at least one conductor or group of conductors, the at least one protection layer and the inner jacket layer form the core of the fire-resistant cable, which is surrounded by an outer jacket layer.

According to the invention, between the core of the fire-resistant cable and the outer jacket layer a shielding layer is formed around the core of the fire-resistant cable, which shielding layer is provided with transfer ports that allow transfer of gaseous and/or non-gaseous material emitted by the core of the fire-resistant cable.

Hence, the fire-resistant cable comprises at least one conductor or group of conductors, preferably groups of conductors forming individual cable sections along which electrical or optical signals, such as signals of a communication protocol, or electrical energy is transferred. The individual electrical conductor or the conductors of the group or groups of conductors are preferably made from stranded copper and/or aluminium wires or from a conductive polymer or a superconductor or a carbon steel conductor or a metal alloy. Optical conductors may be made of silica.

The at least one protection layer is preferably a fire-protection layer formed around and enclosing the individual conductors or groups of conductors. The protection layer is preferably made from plastic material having excellent dielectric constant property as normally used for insulating of conductors. Preferably, the protection layer is made from solid high-density polyethylene (HDPE). This material may be self-extinguishable or not-self-extinguishable.

The protection layer may also be made by tightly wrapping one or more tapes of a tape-shaped ribbon. On first tape windings second tape windings may be applied. The tape of the first and/or second windings is preferably a mica tape. Preferably, the tape width is between 0.3 cm and 5 cm. The tape width is preferably selected according to the diameter of the conductor. The overlap between subsequent tape turns of the first and/or second tape windings is preferably between 5% and 20%.

Hence, the protection layer may be a layer consisting of unified solid material or wrapped material.

Additional protection layers of solid material or wrapped material may be applied.

The thickness of the at least one protection layer is preferably less than 4 mm, preferably less than 2 mm or smaller.

The plurality of conductors or groups of conductors are contained preferably individually in the at least one protection layer and are embedded in common in the at least one inner jacket layer.

The inner jacket layer, which encloses one or more cable core sections, is preferably made from an insulating plastic material, such as polymeric material or thermoplastic elastomeric material. The material used for the inner jacket layer is preferably made from self-extinguishable material that has good fire-resistance properties. The material shall have a suitable dielectric constant and suitable mechanical properties for maintaining the geometrical distances of the cable core section or cable core sections center relative to one another and relative to the longitudinal axis of the fire-resistant cable.

The inner jacket layer preferably has a thickness in the range from 2 mm to 6 mm or in the range from 10% to 40% of the radius of the fire-resistant cable.

The at least one conductor or group of conductors, the at least one protection layer and the at least one inner jacket layer form the core of the fire-resistant cable, which is surrounded by the shielding layer, which is provided with the transfer ports.

The core of the fire-resistant cable may comprise at least one additional preferably polymeric inner protection layer and/or at least one structural element that stabilizes the core of the fire-resistant cable. There further inner protection layer may also be provided with transfer ports as specified for the shielding leader.

The shielding layer consists of plastic or metal or a combination thereof. Preferably the shielding layer comprises an inner plastic layer preferably consisting of polyester and an outer metal layer, which faces the outer jacket layer, preferably consisting of aluminum. The shielding layer may also comprise a centralized metal layer preferably consisting of aluminum arranged between an inner and an outer plastic layer preferably consisting of polyester.

The shielding layer consists of turns or windings of a tape that preferably has a thickness in the range of approximately 0.05 mmm to 0.2 mm. Preferably, the turns of the tape are helically applied with an overlap between subsequent tape turns in the range of preferably 20% to 30%.

The shielding layer secures the stability of the core of the fire-resistant cable and serves as a shield against the impact of fire and heat, thus preventing the core of the fire-resistant cable in the event of fire from being directly exposed to flames. The shielding layer itself is fire resistant for a relatively long period of time.

The transfer ports are designed to allow emitted material to pass from the inner jacket layer towards the outer jacket layer. Typically gaseous material is emitted when the core of the fire-resistant cable is heated, e.g. under the impact of fire. The transfer ports allow the transfer of pressurized emitted material thus avoiding breakage or rupture of the fire-resistant cable and its core. The transfer ports thus have a pressure release function that ensures that pressure cannot unduly build up inside the shielding layer. Gases transferred to the outside of the shielding layer may then diffuse into the outer layers which may elastically be deformed but will not break. The outer layers or the layers outside the core have therefore a suitable elasticity if they are not permeable with respect to the gases emitted by the core.

Hence, the shielding layer, which is fire resistant, is protected against rupture and destruction by material emitted by the cable core, which is released through the transfer ports and which therefore cannot lead to building up pressure within the cable core that mechanically destroys the cable layers, which would lead to immediate destruction of the fire-resistant cable. Premature destruction of the shielding layer by building up pressure is therefore avoided. Integrity of the fire-resistant cable in case of fire is therefore limited only by the fire resistance of its layers and not by its mechanical stability.

According to the invention it is therefore ensured that flame - resistant material is optimally used and not destroyed by mechanical impact due to outgassing of layers of the core of the fire-resistant cable and the resulting exposure to fire.

The transfer ports of the shielding layer are preferably provided as perforations, holes, weakening lines with material reduction or as slits that will open under pressure.

In preferred embodiments, the transfer ports have a length or diameter in the range from 0.25 mm to 2.5 mm. The transfer ports typically cover an area in the range of 1% - 10% of the area of the shielding layer.

The transfer ports are preferably arranged in equal distances from one another or preferably in equal distances along a line, such as a helical line extending along the longitudinal axis of the cable. The transfer ports may also be arranged in groups in equal distances from one another or in groups preferably in equal distances along a line, such as a helical line extending along the longitudinal axis of the cable. More preferably the transfer ports are arranged preferably in equal distances along a line, such as a helical line extending along the longitudinal axis of the cable and inclined thereto by an angle of approximately 120°.

As stated, in preferred embodiments, the shielding layer consists of turns or windings of a tape. The transfer ports may preferably arranged on at least one line that extends in parallel, coaxially or offset, to the center axis of the tape.

It is therefore ensured that pressure building up within the core of the fire-resistant cable can safely be released in all cable sections that are exposed to heat.

In further preferred embodiments, the fire-resistant cable comprises in addition an electromagnetic shielding layer and/or at least one outer protection layer enclosing the core of the fire-resistant cable. The outer protection layer is preferably made of or preferably comprises polymeric material.

The at least one outer protection layer which encloses the core of the fire-resistant cable preferably also comprises transfer ports.

The transfer ports of the at least one outer protection layer are preferably provided as perforations, holes, weakening lines with material reduction or as slits that will open under pressure.

In preferred embodiments, the transfer ports of the at least one outer protection layer have a length or diameter in the range from 0.25 mm to 3.5 mm and preferably cover an area in the range of 1% - 10% of the area of the at least one outer protection layer.

The transfer ports of the at least one outer protection layer are preferably arranged in equal distances from one another or preferably in equal distances along a line, such as a helical line extending along the longitudinal axis of the cable. The transfer ports of the at least one outer protection layer may also be arranged in groups in equal distances from one another or in groups preferably in equal distances along a line, such as a helical line extending along the longitudinal axis of the cable. More preferably the transfer ports of the at least one outer protection layer are arranged preferably in equal distances along a line, such as a helical line extending along the longitudinal axis of the cable and inclined thereto by an angle of approximately 120°.

In preferred embodiments, the at least one outer protection layer may consist of turns or windings of a tape. The transfer ports may preferably arranged on at least one line that extends in parallel, coaxially or offset, to the center axis of the tape.

It is therefore ensured that pressure building up within the core of the fire-resistant cable can safely be released from the core and can also pass through the outer layers enclosing the core of the fire-resistant cable.

The at least one outer jacket is preferably formed from an insulating polymeric material that surrounds the protection layer applied to the conductors. In addition, enforcing layers (e.g. made from an aramid braid) and/or electric screening layer (e.g. made from an electrically conductive braid from conducting wires) are positioned between any of the other layers of the cable.

The present invention will be further described by way of example, with reference to the accompanying drawings, wherein:
- Fig. 1a: depicts a spatial view of an inventive fire-resistant cable 10 having a cable core 100 enclosed by a shielding layer 4 consisting of partially overlapping wrappings of a tape 41;
- Fig. 1b: depicts a tape 41 used for manufacturing the shielding layer 4 of Fig. 1a that comprises a metal layer 411 enclosed by an inner plastic layer 412 and an outer plastic layer 413;
- Fig. 1c: depicts a tape 41 used for manufacturing the shielding layer 4 of Fig. 1a that comprises a metal layer 411 combined with an inner plastic layer 412; and
- Fig. 2: schematically depicts a cross-sectional view of another fire-resistant cable 10.

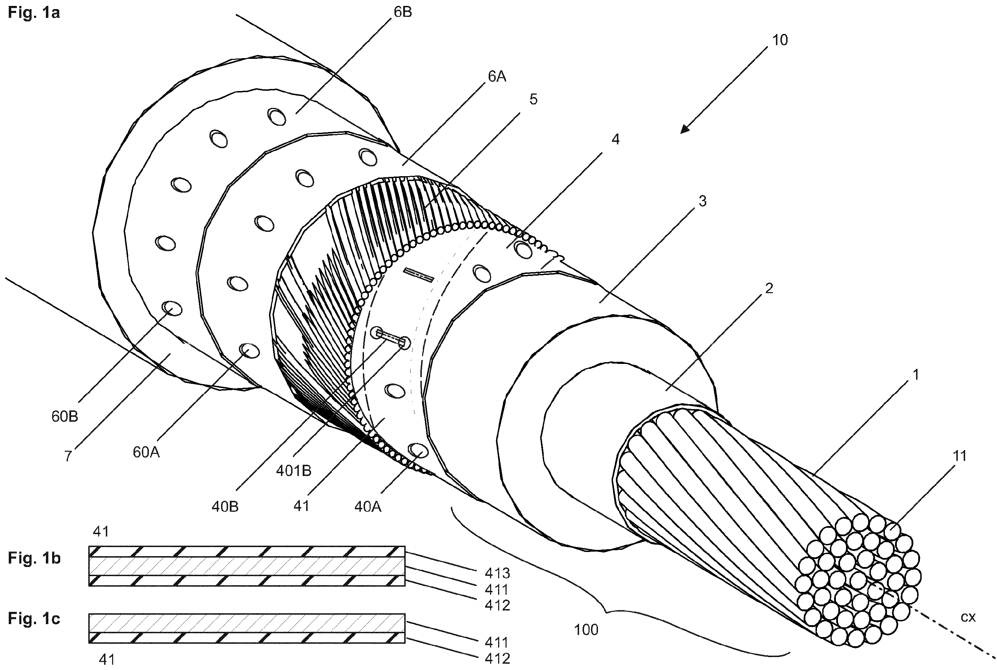

Fig. 1a shows a fire-resistant cable 10 with a conductor 1 that comprises a plurality of wire elements 11. A fire-resistant protection layer 2 is surrounding the conductor 1. An inner jacket layer 3 is formed around and enclosing the protection layer 2. As shown, the thickness of the jacket layer 3 is by a factor in the range of approximately 5 to 15 higher than the thickness of the protection layer 2.

The protection layer 2, which may be a layer consisting of unified solid material or wrapped material, is preferably made from plastic material having an excellent dielectric constant property. Preferably, the protection layer is made from solid high-density polyethylene (HDPE). The material used for the protection layer 2 may be self-extinguishable or not-self-extinguishable.

The protection layer 2 is preferably made by tightly wrapping one or more tapes of a tape-shaped ribbon. On first tape windings second tape windings may be applied preferably wound in opposite direction. The tape is preferably a mica tape. Preferably, the tape width is between 0.3 cm and 5 cm and/or selected according to the diameter of the conductor.

The inner jacket layer 3, which encloses the protection layer 2, is preferably made from an insulating plastic material, such as polymeric material or thermoplastic elastomeric material. Preferably self-extinguish material is used that has good fire-resistance properties, suitable dielectric constant properties and suitable mechanical properties for maintaining the conductor 1 aligned coaxially along the longitudinal axis cx of the fire-resistant cable 10. The inner jacket layer 3 may be provided in the form of tape windings or may be extruded.

The conductor 1, the protection layer 2 and the inner jacket layer 3 form the core 100 of the fire-resistant cable 10, whose condition is of crucial importance for the operability of the fire-resistant cable 10.

In order to protect the cable core 100 a shielding layer 4 is provided, which surrounds the core 100 of the fire-resistant cable 10. The shielding layer 4 is provided with transfer ports 40; 40A, 40B that allow transfer of gaseous and/or non-gaseous material emitted by the core 100 of the fire-resistant cable 10 under the impact of fire.

In this embodiment, the shielding layer 4 consists of turns or windings of a tape 41 that preferably has a thickness in the range of approximately 0.05 mmm to 0.2 mm. The turns of the tape are helically applied with an overlap between subsequent tape turns in the range of preferably 20% to 30% indicated by dashed lines.

The tape 41 consists of plastic or metal or a combination thereof. The transfer ports 40; 40A, 40B are arranged along the center line of the tape 41. As shown in Fig. 1a the overlap of subsequent windings is selected such that the transfer ports 40 are not impaired.

The transfer ports 40 are selected such that material emitted by the core 100 of the fire-resistant cable 10 can escape towards the outside. For this purpose, the transfer ports 40A in a first embodiment are permanently open or the transfer ports 40B in a second embodiment are at least partially closed and can be opened under pressure built up when the cable core 100 is heated. The transfer ports 40B are preferably slits, which are fully closed or almost closed but will open under pressure to let the emitted material pass. In this respect it may also be sufficient that the transfer ports 40 are zones of weakening, which tend to deform and/or break in a controlled manner allowing to release of pressure built up in the core 100 of the fire-resistant cable 10 in order to avoid rupture of the cable layers. In this case, material emitted by the cable core 100 may pass beyond the initial radius of the shielding layer 4 by deforming the outer layers 5 and/or 6 and/or 7.

The transfer ports 40 are selected as large as required, so that emitted material can pass said radius or pass through, and as small as possible so that heat and fire have no significant influence on the core 100 of the fire-resistant cable 10. In this respect, transfer ports 40B in the embodiment of slits have the advantage of optimum shielding against heat and fire, while passing of emitted material is allowed as soon as pressure builds up around the cable core 100. Slits with circular terminals 401B at both ends, which avoid tearing the shielding layer 3 apart when the transfer ports 40B are open, are preferably applied.

Hence, relatively small transfer ports 40A may be permanently open or even larger at least partially closed transfer ports 40B may be provided as windows, e.g. with perforations, which open under the impact of pressure. Hence, the transfer ports 40, 40A, 40B, which are symbolically shown in Fig. 1a, may be provided as perforations, holes, weakening lines with material reduction or as slits that will open or break open under pressure.

The shielding layer 4 therefore secures the stability of the core 100 of the fire-resistant cable 10 and serves as a shield against the impact of fire and heat even after the cable core 100 has started to emit gaseous or non-gaseous material, which would otherwise lead to abrupt destruction of the fire-resistant cable 10. The shielding layer 4 itself is fire resistant for a relatively long period of time. With the provision of the transfer ports 40, 40A, 40B it is ensured that the fire-resistant cable 10 does not get destroyed before this period of time has lapsed. Hence, it is prevented that pressure builds up and layers of the fire-resistant cable 10 prematurely break open so that fire can access the cable core 100 and immediately destroy operability of the fire-resistant cable 10.

Fig. 1a shows that inventive fire-resistant cables 10 may have additional layers, such as a braided shield 5, and outer protection layers 6A, 6B as required to fulfil specific functions such as shielding against electromagnetic waves or to enhance fire-resistance. Additional protection layers may be provided within or outside of the core 100 of the fire-resistant cables 10.

The outer protection layers 6A, 6B are preferably also provided with transfer ports 60A, 60B, which have the same properties and/or dimensions as the transfer ports 40 of the shielding layer 4. By providing transfer ports 60A, 60B also in the additional outer protection layers 6A, 6B it is ensured that

The transfer ports 60A, 60B are selected such that material emitted by the core 100 of the fire-resistant cable 10 can escape through the outer protection layers 6A, 6B, .... For this purpose, the transfer ports 60A, 60B of the outer protection layers 6A, 6B in a first embodiment are permanently open or a second embodiment are at least partially closed and can be opened under pressure built up when the cable core 100 is heated. The transfer ports 60A, 60B of the outer protection layers 6A, 6B are preferably slits, which are fully closed or almost closed but will open under pressure to let the emitted material pass. In this respect it may also be sufficient that the transfer ports 60A, 60B of the outer protection layers 6A, 6B are zones of weakening, which tend to deform and/or break in a controlled manner allowing to release of pressure.

Fig. 1b shows a tape 41 used for manufacturing the shielding layer 4 of Fig. 1a. In this embodiment the tape 41 comprises a metal layer or metal core 411 enclosed by an inner plastic layer 412 and an outer plastic layer 413.

Fig. 1c shows a tape 41 used for manufacturing the shielding layer 4 of Fig. 1a. In this embodiment the tape 41 comprises a metal layer 411 combined with an inner plastic layer 412. The tape 41 is applied with the metal layer 411 preferably facing the outer jacket layer 7.

The metal layer 411 of the tape 41 shown in Fig. 1b and in Fig. 1c preferably consists of aluminum and the plastic layers preferably consist of polyester.

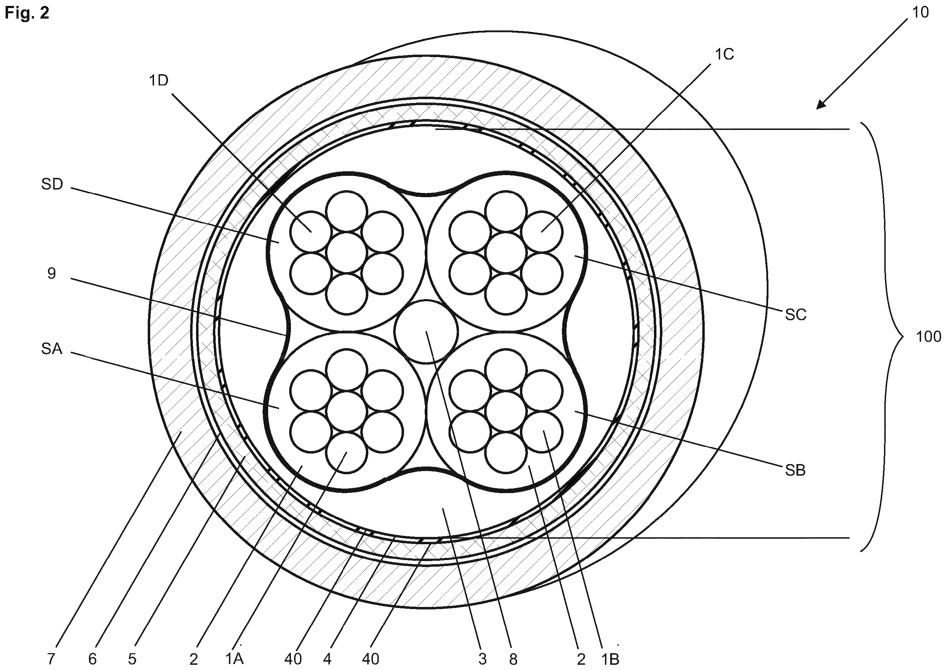

Fig. 2 schematically depicts a cross-sectional view of another fire-resistant cable 10 having a cable core 100 enclosed by a shielding layer 4, a braided shield 5, any number of inner and outer protection layers 6 and the outer jacket layer 7 as already described with reference to Fig. 1a. As stated for the embodiment of Fig. 1a the layer structure enclosing the cable core 100 is selected as required.

As well, as illustrated in Fig. 2, the cable core 100 can be provided in any embodiment that comprises at least one core section SA, SB, SC and SD, at least one conductor 1 or at least one group of conductors 1A, 1B, 1C, 1D that are each individually enclosed in a protection layer 2 and jointly enclosed in an inner jacket layer 3 formed around and enclosing said core section SA, SB, SC and SD.

In this embodiment the cable core 100 comprises four core sections SA, SB, SC and SD, each comprising any number of joint conductors 1A, 1B, 1C, 1D each enclosed in at least one protection layer 2.

In order to align and hold the individual core sections SA, SB, SC and SD aligned along predetermined axes a cylindrical central filler 8 is provided. The central filler 8 is preferably made of plastic such as a solid polyolefin and has preferably a diameter of approximately 0.83 of the radius of the adjoining core sections SA, SB, SC and SD.

The core sections SA, SB, SC and SD are further enclosed by a plastic tape 9, such as a polyester tape with a thickness in the range of 0.015 mm to 0.035 mm, that has good mechanical and dielectric constant properties used to maintain the geometry of the aligned core sections SA, SB, SC and SD.

The core sections SA, SB, SC and SD enclosed in the plastic tape 9 are further fully enclosed by the inner at least one jacket layer 3, which may consist of material as described for the embodiment of Fig. 1a.

As described particularly in the shielding layer 4 is provided with transfer ports 40. However, also the outer protection layers 60 and possibly inner layers and structural layers 9 may also be provided with transfer ports, which are selected, e.g. as described for the transfer ports 40 of the shielding layer 4, in order to ensure material transfer and pressure reduction when heated.

### List of reference signs

- 1: conductor
- 1A, ..., 1D: groups of conductors
- 10: fire-resistant cable
- 100: core of the fire-resistant cable
- 11: wires
- 2: protection layer, preferably fire resistant
- 3: inner jacket layer
- 4: shielding layer
- 40: transfer ports
- 41: tape made of metal and/or plastic
- 411: metal layer
- 412: inner plastic layer
- 413: outer plastic layer
- 5: braided shield layer made of metal
- 6A, 6B: outer protection layers
- 60A, 60B: transfer ports
- 7: outer jacket layer
- 8: central filler
- 9: structural layer, preferably plastic tape
- cx: cable longitudinal axis

## Claims

1. A fire-resistant cable (10) with a cable longitudinal axis (cx), comprising:
- at least one conductor or group of conductors (1; 1A, 1B, 1C, 1D);
- at least one protection layer (2) formed around and enclosing said conductor or group of conductors (1; 1A, 1B, 1C, 1D);
- an inner jacket layer (3) formed around and enclosing said at least one protection layer (2);
the at least one conductor or group of conductors (1; 1A, 1B, 1C, 1D), the at least one protection layer (2) and the inner jacket layer (3) forming the core (100) of the fire-resistant cable (10), which is surrounded by an outer jacket layer (7);
**characterized in that;**
between the core (100) of the fire-resistant cable (10) and the outer jacket layer (7) at least one shielding layer (4) is formed around the core (100) of the fire-resistant cable (10), which shielding layer (4) is provided with transfer ports (40) that allow transfer of gaseous and/or non-gaseous material emitted by the core (100) of the fire-resistant cable (10); wherein
the shielding layer (4) consists of turns of a tape that preferably has a thickness in the range of approximately 0.05 mmm to 0.2 mm.

2. A fire-resistant cable (10) according to claim 1, wherein the least one protection layer (2) consists of fire resistant material such as solid high-density polyethylene (HDPE).

3. A fire-resistant cable (10) according to claim 1 or 2, wherein the least one protection layer (2) is formed from turns of a tape preferably wrapped in opposing directions with respect to the cable longitudinal axis (cx).

4. A fire-resistant cable (10) according to claim 1, 2 or 3, wherein the at least one inner jacket layer (3) consists of plastic material, preferably thermoplastic elastomeric material that protects the inner layers and conductors against mechanical and chemical impact.

5. A fire-resistant cable (10) according to one of the claims 1 - 4, wherein a plurality of conductors or groups of conductors (1; 1A, 1B, 1C, 1D) are individually contained in the at least one protection layer (2) and are embedded in common in the inner jacket layer (3).

6. A fire-resistant cable (10) according to one of the claims 1 - 5, wherein at least one outer protection layer (6A, 6B) is enclosing the core (100) of the fire-resistant cable (10), which outer protection layer (6A, 6B) is provided with transfer ports (60A, 60B).

7. A fire-resistant cable (10) according to one of the claims 1 - 6, wherein the transfer ports (40) of the shielding layer (4) and/or the transfer ports (60A, 60B) of the at least one outer protection layer (6A, 6B) are provided as perforations, holes, weakening lines with material reduction or as slits that will open under pressure.

8. A fire-resistant cable (10) according to one of the claims 1 - 7, wherein the transfer ports (40) of the shielding layer (4) have a length or diameter in the range from 0.25 mm to 2.5 mm and/or wherein transfer ports (40) cover an area in the range of 1% - 10% of the area of the shielding layer (4).

9. A fire-resistant cable (10) according to one of the claims 1 - 8, wherein the transfer ports (40) of the shielding layer (4) are arranged in equal distances from one another or preferably in equal distances along a line, such as a helical line extending along the longitudinal axis (cx) or wherein the transfer ports (40) of the shielding layer (4) are arranged in groups in equal distances from one another or in groups preferably in equal distances along a line, such as a helical line extending along the longitudinal axis (cx).

10. A fire-resistant cable (10) according to one of the claims 1 - 9, wherein the transfer ports (40) of the shielding layer (4) are arranged preferably in equal distances along a line, such as a helical line extending along the longitudinal axis (cx) and inclined thereto by an angle of approximately 120°.

11. A fire-resistant cable (10) according to one of the claims 1 - 10, wherein the shielding layer (4) consists of plastic or metal or a combination thereof or wherein the shielding layer (4) comprises an inner and/or an outer plastic layer preferably consisting of polyester and a metal layer preferably consisting of aluminum.

12. A fire-resistant cable (10) according to one of the claims 1 - 11, wherein turns of the tape are helically applied with an overlap between subsequent tape turns in the range of preferably 20% to 30% and wherein the tape comprises the transfer ports (40) preferably arranged on at least one line that extends in parallel, coaxially or offset, to the center axis of the tape.

13. A fire-resistant cable (10) according to one of the claims 1 - 12, further comprising an electromagnetic shielding layer (5).

14. A fire-resistant cable (10) according to one of the claims 1 - 13, further comprising at least one additional preferably perforated protection layer or preferably perforated structural element (8, 9) contained in the core (100) of the fire-resistant cable (10).

## Patentansprüche

1. Ein feuerbeständiges Kabel (10) mit einer Kabellängsachse (cx), umfassend:
- mindestens einen Leiter oder eine Gruppe von Leitern (1; 1A, 1B, 1C, 1D);
- mindestens eine Schutzschicht (2), die um den Leiter oder die Gruppe von Leitern (1; 1A, 1B, 1C, 1D) herum ausgebildet ist und diese umschliesst;
- eine innere Hüllschicht (3), die um die mindestens eine Schutzschicht (2) herum ausgebildet ist und diese umschliesst;
der mindestens eine Leiter oder die Gruppe von Leitern (1; 1A, 1B, 1C, 1D), die mindestens eine Schutzschicht (2) und die innere Hüllschicht (3) bilden den Kern (100) des feuerfesten Kabels (10), das von einer äußeren Hüllschicht (7) umgeben ist;
**dadurch gekennzeichnet, dass**
zwischen dem Kern (100) des feuerbeständigen Kabels (10) und der äußeren Hüllschicht (7) mindestens eine Abschirmschicht (4) um den Kern (100) des feuerbeständigen Kabels (10) ausgebildet ist, wobei diese Abschirmschicht (4) mit Durchgangsöffnungen (40) versehen ist, die den Durchgang von gasförmigem und/oder nicht-gasförmigem Material ermöglichen, das vom Kern (100) des feuerbeständigen Kabels (10) abgegeben wird; wobei
die Abschirmschicht (4) aus Windungen eines Bandes besteht, das vorzugsweise eine Dicke im Bereich von etwa 0,05 mm bis 0,2 mm aufweist.

2. Ein feuerbeständiges Kabel (10) nach Anspruch 1, wobei die mindestens eine Schutzschicht (2) aus feuerbeständigem Material, wie festem hochdichtem Polyethylen (HDPE), besteht.

3. Ein feuerbeständiges Kabel (10) nach Anspruch 1 oder 2, wobei mindestens eine Schutzschicht (2) aus Windungen eines Bandes gebildet ist, die vorzugsweise in entgegengesetzte Richtungen zur Kabellängsachse (cx) gewickelt sind.

4. Ein feuerbeständiges Kabel (10) nach Anspruch 1, 2 oder 3, wobei die mindestens eine innere Hüllschicht (3) aus Kunststoff, vorzugsweise aus thermoplastischem, elastomerem Material besteht, das die inneren Schichten und Leiter vor mechanischen und chemischen Einflüssen schützt.

5. Ein feuerbeständiges Kabel (10) nach einem der Ansprüche 1 - 4, wobei eine Vielzahl von Leitern oder Gruppen von Leitern (1; 1A, 1B, 1C, 1D) individual in der mindestens einen Schutzschicht (2) enthalten sind und gemeinsam in die innere Hüllschicht (3) eingebettet sind.

6. Ein feuerbeständiges Kabel (10) nach einem der Ansprüche 1 - 5, wobei mindestens eine äußere Schutzschicht (6A, 6B) den Kern (100) des feuerbeständigen Kabels (10) umgibt, wobei die äußere Schutzschicht (6A, 6B) mit Durchgangsöffnungen (60A, 60B) versehen ist.

7. Ein feuerbeständiges Kabel (10) nach einem der Ansprüche 1 - 6, wobei die Durchgangsöffnungen (40) der Abschirmschicht (4) und/oder die Durchgangsöffnungen (60A, 60B) der mindestens einen äußeren Schutzschicht (6A, 6B) als Perforationen, Löcher, Schwächungslinien mit Materialreduktion oder als Schlitze ausgebildet sind, die sich unter Druck öffnen.

8. Ein feuerbeständiges Kabel (10) nach einem der Ansprüche 1 - 7, wobei die Durchgangsöffnungen (40) der Abschirmschicht (4) eine Länge oder einen Durchmesser im Bereich von 0,25 mm bis 2,5 mm aufweisen und/oder wobei die Durchgangsöffnungen (40) eine Fläche im Bereich von 1 % - 10 % der Fläche der Abschirmschicht (4) abdecken.

9. Ein feuerbeständiges Kabel (10) nach einem der Ansprüche 1 - 8, wobei die Durchgangsöffnungen (40) der Abschirmschicht (4) in gleichen Abständen voneinander oder vorzugsweise in gleichen Abständen entlang einer Linie, wie beispielsweise einer sich entlang der Längsachse (cx) erstreckenden spiralförmigen Linie, angeordnet sind, oder wobei die Durchgangsöffnungen (40) der Abschirmschicht (4) in Gruppen in gleichen Abständen voneinander oder in Gruppen vorzugsweise in gleichen Abständen entlang einer Linie, wie beispielsweise einer sich entlang der Längsachse (cx) erstreckenden spiralförmigen Linie, angeordnet sind.

10. Ein feuerbeständiges Kabel (10) nach einem der Ansprüche 1 - 9, wobei die Durchgangsöffnungen (40) der Abschirmschicht (4) vorzugsweise in gleichen Abständen entlang einer Linie angeordnet sind, wie einer spiralförmigen Linie, die sich entlang der Längsachse (cx) erstreckt und zu dieser um einen Winkel von etwa 120° geneigt ist.

11. Ein feuerbeständiges Kabel (10) nach einem der Ansprüche 1 - 10, wobei die Abschirmschicht (4) aus Kunststoff oder Metall oder einer Kombination daraus besteht oder wobei die Abschirmschicht (4) eine innere und/oder eine äußere Kunststoffschicht, vorzugsweise aus Polyester, und eine Metallschicht, vorzugsweise aus Aluminium, umfasst.

12. Ein feuerbeständiges Kabel (10) nach einem der Ansprüche 1 - 11, wobei die Bandwindungen spiralförmig mit einer Überlappung zwischen aufeinanderfolgenden Bandwindungen im Bereich von vorzugsweise 20 % bis 30 % aufgebracht sind und wobei das Band Durchgangsöffnungen (40) aufweist, die vorzugsweise auf mindestens einer Linie angeordnet sind, die sich parallel, koaxial oder versetzt zur Mittelachse des Bandes erstreckt.

13. Ein feuerbeständiges Kabel (10) nach einem der Ansprüche 1 - 12, das zusätzlich eine elektromagnetische Abschirmschicht (5) umfasst.

14. Ein feuerbeständiges Kabel (10) nach einem der Ansprüche 1 - 13, das ferner mindestens eine zusätzliche, vorzugsweise perforierte Schutzschicht oder ein vorzugsweise perforiertes Strukturelement (8, 9) umfasst, das im Kern (100) des feuerbeständigen Kabels (10) enthalten ist.

## Revendications

1. Un câble résistante au feu (10) présentant un axe longitudinal (cx), comprenant:
- au moins un conducteur ou un groupe de conducteurs (1 ; 1A, 1B, 1C, 1D);
- au moins une couche de protection (2) formée autour dudit conducteur ou groupe de conducteurs (1 ; 1A, 1B, 1C, 1D) et les entourant;
- une couche enveloppante interne (3) formée autour de ladite au moins une couche de protection (2) et l'entourant;
l'au moins un conducteur ou groupe de conducteurs (1 ; 1A, 1B, 1C, 1D), l'au moins une couche de protection (2) et la couche enveloppante interne (3) formant l'âme (100) du câble résistant au feu (10), qui est entourée d'une couche enveloppante externe (7) ;
**caractérisé en ce que;**
entre l'âme (100) du câble résistant au feu (10) et la couche d'enveloppe extérieure (7), au moins une couche de blindage (4) est formée autour de l'âme (100) du câble résistant au feu (10), laquelle couche de blindage (4) est pourvue des ports de transfert (40) qui permettent le transfert de matière gazeuse et/ou non gazeuse émise par l'âme (100) du câble résistant au feu (10) ; dans lequel
la couche de blindage (4) est constituée de spires d'un ruban dont l'épaisseur se situe de préférence entre environ 0,05 mm et 0,2 mm.

2. Un câble résistante au feu (10) selon la revendication 1, dans lequel au moins une couche de protection (2) est constituée d'un matériau résistant au feu, tel que du polyéthylène haute densité (PEHD) solide.

3. Un câble résistante au feu (10) selon la revendication 1 ou 2, dans lequel au moins une couche de protection (2) est formée de spires d'un ruban enroulées de préférence dans des directions opposées par rapport à l'axe longitudinal du câble (cx).

4. Un câble résistante au feu (10) selon la revendication 1, 2 ou 3, dans lequel la au moins une couche d'enveloppe interne (3) est constituée d'une matière plastique, de préférence une matière élastomère thermoplastique, qui protège les couches internes et les conducteurs contre les influences mécaniques et les agressions chimiques.

5. Un câble résistante au feu (10) selon une des revendications 1 - 4, dans lequel une pluralité de conducteurs ou de groupes de conducteurs (1 ; 1A, 1B, 1C, 1D) sont contenus individuellement dans la au moins une couche de protection (2) et sont incorporés en commun dans la couche enveloppante interne (3).

6. Un câble résistante au feu (10) selon une des revendications 1 - 5, dans lequel au moins une couche de protection extérieure (6A, 6B) entoure l'âme (100) du câble résistant au feu (10), ladite couche de protection extérieure (6A, 6B) étant pourvue de ports de transfert (60A, 60B).

7. Un câble résistante au feu (10) selon une des revendications 1 - 6, dans lequel les ports de transfert (40) de la couche de blindage (4) et/ou les ports de transfert (60A, 60B) de la au moins une couche de protection extérieure (6A, 6B) sont réalisés sous forme de perforations, de trous, de lignes d'affaiblissement avec réduction de matière ou de fentes qui s'ouvrent sous pression.

8. Un câble résistante au feu (10) selon une des revendications 1 - 7, dans lequel les ports de transfert (40) de la couche de blindage (4) ont une longueur ou un diamètre compris entre 0,25 mm et 2,5 mm et/ou dans lequel les ports de transfert (40) couvrent une surface comprise entre 1 % et 10 % de la surface de la couche de blindage (4).

9. Un câble résistante au feu (10) selon une des revendications 1 - 8, dans lequel les ports de transfert (40) de la couche de blindage (4) sont disposés à distances égales les uns des autres ou, de préférence, à distances égales le long d'une ligne, telle qu'une ligne hélicoïdale s'étendant le long de l'axe longitudinal (cx), ou dans lequel les ports de transfert (40) de la couche de blindage (4) sont disposés en groupes à distances égales les uns des autres ou, de préférence, en groupes à distances égales le long d'une ligne, telle qu'une ligne hélicoïdale s'étendant le long de l'axe longitudinal (cx).

10. Un câble résistante au feu (10) selon une des revendications 1 - 9, dans lequel les ports de transfert (40) de la couche de blindage (4) sont disposés de préférence à intervalles égaux le long d'une ligne, telle qu'une ligne hélicoïdale s'étendant le long de l'axe longitudinal (cx) et inclinée par rapport à celui-ci d'un angle d'environ 120°.

11. Un câble résistante au feu (10) selon une des revendications 1 - 10, dans lequel la couche de blindage (4) est constituée de plastique ou de métal ou d'une combinaison de ceux-ci, ou dans lequel la couche de blindage (4) comprend une couche intérieure et/ou une couche extérieure en plastique, de préférence en polyester, et une couche métallique, de préférence en aluminium.

12. Un câble résistante au feu (10) selon une des revendications 1 - 11, dans lequel les spires de la bande sont enroulées en hélice avec un chevauchement entre les spires successives compris de préférence entre 20 % et 30 %, et dans lequel la bande comporte des ports de transfert (40) disposés de préférence sur au moins une ligne s'étendant parallèlement, coaxialement ou en décalage par rapport à l'axe central de la bande.

13. Un câble résistante au feu (10) selon une des revendications 1 - 12, comprenant en outre une couche de blindage électromagnétique (5).

14. Un câble résistante au feu (10) selon une des revendications 1 - 13, comprenant en outre au moins une couche de protection supplémentaire, de préférence perforée, ou un élément structurel supplémentaire, de préférence perforé (8, 9), contenu dans l'âme (100) du câble résistant au feu (10).
